# EUROPEAN PATENT SPECIFICATION

(11) **EP 3 547 055 B1**
(45) Date of publication and mention of the grant of the patent: **19.10.2022**
(21) Application number: 19156385.7
(22) Date of filing: 11.02.2019
(51) Int. Cl.: G05B 19/418, H04L 12/46

(54) **CONTROL APPARATUS**
STEUERUNGSVORRICHTUNG
APPAREIL DE COMMANDE

(30) Priority: 30.03.2018 JP 2018068198
(43) Date of publication of application: 02.10.2019
(73) Proprietor: OMRON Corporation, Shiokoji-dori, Shimogyo-Ku Kyoto-shi Kyoto 600-8530 (JP)
(72) Inventor: UEDA, Takamasa, Kyoto-shi, Kyoto 600-8530 (JP)
(74) Representative: 2K Patentanwälte Blasberg Kewitz & Reichel

(56) References cited:
- EP-A1- 1 760 563
- EP-A1- 2 797 265
- JP-A- 2008 084 343
- US-A1- 2008 298 365
- US-A1- 2012 263 178

## Description

### BACKGROUND

### [Technical field]

The disclosure relates to a control apparatus for controlling an object under control.

### [Description of Related Art]

Conventionally, in the field of factory automation (FA), a configuration in which a control apparatus, such as a programmable controller (PLC), is connected to an information system that deals with production management information such as production instructions or production results is adopted.

For example, JP 2008-084343 A discloses a programmable controller, etc., that is capable of transmitting and receiving data even among apparatuses (computers, PLCs, etc.) connected to networks different each other.

Along with the progress in information and communication technologies (ICT) in recent years, there is also a need to exchange various information between control apparatuses. The configuration disclosed in JP 2008-084343 A is a PLC including a CPU (central processing unit) and a communication unit, and assumes that each unit is connected to a different network.

In the case where such a configuration is adopted, communication units in the same number as the number of networks that are connected are required, and the configuration becomes complicated.

EP 1 760 563 A1 discloses a control apparatus according to the preamble of claim 1. The communication system is formed with a master unit and at least one slave unit connected by a network including a bus. Repeater units are inserted on the network between the master unit and the slave unit in one or more stages. As the master unit transmits broadcast request frames downstream through the network to the slave units, each slave unit controls the timing of transmitting the response frames successively such that the master unit receives the response frames without waiting in between regardless of repeater delay times of each of the returned response frames determined by the number of stages of the repeater units. Each communication frame that is transmitted through the network contains identification data indicative of its type and each repeater unit serves to repeat certain types of received frames only in the upstream direction.

EP 2 797 265 discloses a routing and a gateway (protocol conversion) in a network system, wherein frame data can simply be generated even if a source node does not understand format specifications of all protocols. A source node transmits "common routing information ", which includes route information identifying all the nodes through which a message frame is routed from an own node to a destination node, while adding the common routing information on the message frame. Each relay node sequentially transfers the message frame while referring to the common routing information to perform identification of a destination, generation of a header, and update of the common routing information.

US 2008/298365 A1 discloses a packet relay method which enables a multicast transfer or broadcast transfer of a packet effectively is provided. When the node receives a packet set with a multicast address or broadcast address as a destination address from a source client, the packet is added with an MPLS label common to destination clients corresponding to the multicast address or all destination clients corresponding to the broadcast address. The packet added with the common MPLS label is transferred over a ring network. When receiving the packet from a ring network, the node removes a common MPLS label from the received packet to be transmitted to destination clients when it detects that the common MPLS label is added to the received packet.

### SUMMARY

It is an object of the present invention to provide a control apparatus capable of simplifying the configuration of network connection even in the case where multiple control apparatuses are in network connection.

This problem is solved by a control apparatus as claimed by claim 1. Further advantageous embodiments are the subject-matter of the dependent claims.

According to the present invention, a control apparatus for controlling an object under control is provided. The control apparatus comprises a first network controller and a second network controller each configured for exchanging data according to a first communication protocol with another control apparatus, a packet transferring part, coupled to the first network controller and the second network controller, for receiving a packet from one of the first network controller and the second network controller and outputting a duplicate of the received packet, and a packet processing part, coupled to the packet transferring part, for executing a process. According to the present invention, the packet transferring part is configured to determine, based on a header information of the packet received by the one of the first network controller and second network controller, whether to output the duplicate of the received packet, wherein the packet transferring part is further configured to output the duplicate of the received packet by the other of the first network controller and the second network controller to the other control apparatus when the header information indicates that the received packet is a transferable packet directed to the other control apparatus, to output the duplicate of the received packet to the packet processing part when the header information indicates that the received packet is a transferable packet directed to the control apparatus, wherein the packet processing part is further configured to execute the process in correspondence with the duplicate of the received packet given from the packet transferring part, and to discard the packet when the header information indicates that the received packet is not a transferable packet, wherein the packet transferring part is configured to determine, based on a physical address designated as a destination of a packet received, from another network controller of the other control apparatus, by the one of the first network controller and the second network controller, whether to output the duplicate of the received packet.

According to the invention, since it is possible to only duplicate necessary packets and transfer the duplicates to a subsequent stage among the packets entering a certain control apparatus, the increase in traffic in a network composed of multiple control apparatuses can be suppressed.

According to the embodiment of the disclosure, in the case where the plurality of control apparatuses are connected to a network for exchanging data according to the first communication protocol, since it is sufficient to connect the control apparatuses to each other without using a hub, etc., the configuration of network connection can be simplified.

According to an embodiment of the disclosure, the first communication protocol may be a communication protocol including Ethernet (registered trademark) and TCP/IP. According to the embodiment of the disclosure, an Ethernet-based industrial network, etc., can be used.

According to an embodiment of the disclosure, the control apparatus may further include a third network controller for exchanging data according to a second communication protocol different from the first communication protocol. According to the embodiment of the disclosure, data exchange according to the plurality of communication protocols can be performed in parallel.

According to an embodiment of the disclosure, the second communication protocol may be a communication protocol of an industrial network that guarantees arrival time of data. According to the embodiment of the disclosure, an industrial network that guarantees the arrival time of data other than the first communication protocol can be used as a field network.

According to the disclosure, even in the case where multiple control apparatuses are in network connection, the configuration of network connection can be simplified.

### BRIEF DESCRIPTION OF THE DRAWINGS

FIG. 1 is a schematic diagram showing a configuration example of a control apparatus according to the present embodiment.
FIG. 2 is a schematic diagram showing a configuration example of a main unit included in a control apparatus according to the present embodiment.
FIG. 3 is a schematic diagram showing a mode of general hub connection configuration.
FIG. 4 is a schematic diagram showing a connection configuration similar to a daisy chain.
FIG. 5 is a schematic diagram showing a functional configuration in a case where a repeater hub function is implemented in a control apparatus according to the present embodiment.
FIG. 6 is a schematic diagram showing a functional configuration in a case where a switching hub function is implemented in a control apparatus according to an embodiment that is to serve for a better understanding of the present invention.
FIG. 7 is a schematic diagram showing a functional configuration in a case where a router function is implemented in a control apparatus according to a non-claimed embodiment.
FIG. 8 is a schematic diagram showing a functional configuration in a case where a filtering function is implemented in a control apparatus according to an embodiment according to the present invention.

### DESCRIPTION OF THE EMBODIMENTS

Embodiments of the disclosure will be described in detail with reference to the drawings. In the drawings, the same or corresponding parts are denoted by the same reference numerals, and the description thereof will not be repeated.

### <A. Application example>

First, an example of a scene to which the disclosure is applied will be described.

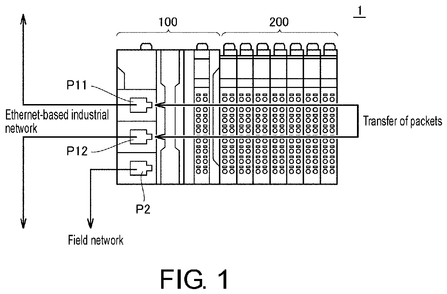

FIG. 1 is a schematic diagram showing a configuration example of a control apparatus 1 according to the present embodiment. Referring to FIG. 1, the control apparatus 1 according to the present embodiment is a programmable controller (PLC) for controlling an object under control including any facility or machine. The control apparatus 1 has at least one main unit 100. The main unit 100 is equivalent to an arithmetic processing part for executing an arbitrary program for controlling the object under control and, as described later, also has a communication function for exchanging data with another apparatus.

In the configuration shown in FIG. 1, the control apparatus 1 includes a local unit 200 connected to the main unit 100 via a local bus. The local unit 200 is assumed to be an input/output unit for exchanging signals with the field, a safety control unit in charge of safety control, a special control unit in charge of PID (Proportional Integral Derivative) control, robot control, etc.

The main unit 100 has three communication ports P11, P12, P2. The communication ports P11 and P12 are capable of exchanging data under the same communication protocol. Typically, the communication ports P11, P12 are connected to an Ethernet-based industrial network.

On the other hand, the communication port P2 exchanges data with a field apparatus, such as a remote input/output device, various sensors, various actuators, etc. Typically, the communication port P2 is connected to a field network. Also, the communication port P2 may be omitted.

In the control apparatus 1, packets can be arbitrarily transferred between the communication port P11 and the communication port P12. That is, the control apparatus 1 has a packet transfer function for outputting a duplicate of a packet received by the communication port P11 from the communication port P12 and outputting a duplicate of a packet received by the communication port P12 from the communication port P11.

By adopting such a packet transfer function, various network functions (e.g., a repeater hub function, a switching hub function, a router function, a filtering function, a packet monitoring function, etc., as described later) can be realized by using the communication port P11 and the communication port P12.

By implementing such network functions in the control apparatus 1, the configuration of network connection can be simplified even in a case where a plurality of control apparatuses are in network connection.

### <B. Configuration example of the main unit 100>

First, a configuration example of the main unit 100 included in the control apparatus 1 according to the present embodiment will be described.

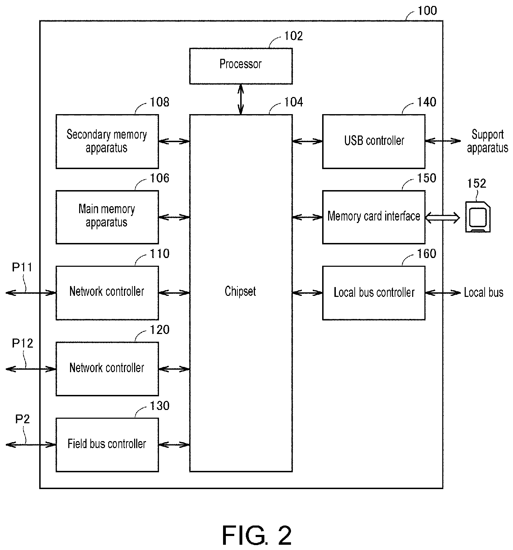

FIG. 2 is a schematic diagram showing a configuration example of the main unit 100 included in the control apparatus 1 according to the present embodiment. Referring to FIG. 2, the main unit 100 includes a processor 102, a chipset 104, a main memory apparatus 106, a secondary memory apparatus 108, network controller 110, network controller 120, a field network controller 130, a universal serial bus (USB) controller 140, a memory card interface 150, and a local bus controller 160.

The processor 102 is equivalent to the arithmetic processing part that executes control computation, etc., and is configured with a central processing unit (CPU), a graphics processing unit (GPU), etc. In particular, the processor 102 reads a program (e.g., a system program or a user program) stored in the secondary memory apparatus 108, develops the program in the main memory apparatus 106, and executes the program, thereby realizing control corresponding to the object under control as well as various processes to be described later.

The chipset 104 mediates and controls data exchange between components constituting the main unit 100.

The main memory apparatus 106 is composed of a volatile memory apparatus, such as a dynamic random access memory (DRAM) or a static random access memory (SRAM). The secondary memory apparatus 108 is composed of, for example, a non-volatile memory apparatus, such as a hard disk drive (HDD) or a solid state drive (SSD).

The network controllers 110, 120 exchange data with another control apparatus or an arbitrary device via respective networks according to a communication protocol for industrial use. Typically, the network controllers 110, 120 are compatible with an Ethernet-based industrial network and have the functions of a physical layer and a data link layer conforming to the specification of the Ethernet.

Further, in the network controllers 110, 120, as a network layer and a transport layer (an Internet layer and a transport layer), a communication protocol such as the transmission control protocol/Internet protocol (TCP/IP) or the user datagram protocol/Internet protocol (UDP/IP) may be used. In this manner, a communication protocol including the Ethernet and TCP/IP may be adopted as the communication protocol used for data exchange by the network controllers 110, 120.

Then, as a session layer, a presentation layer, and an application layer, by adopting a common industrial protocol (CIP), an industrial network such as EtherNet/IP, DeviceNet, ControlNet, CompoNet, etc., can be realized.

By being compatible with the same communication protocol and operating in conjunction with each other, the network controllers 110, 120 can function as a kind of switching hub or repeater hub. That is, packets being transmitted and received can be transferred internally between the network controller 110 and the network controller 120, a duplicate of the packet received by the network controller 110 can be transmitted from the network controller 120, and a duplicate of the packet received by the network controller 120 can also be transmitted from the network controller 110.

The field network controller 130 is compatible with a communication protocol different from the communication protocol used in the network controllers 110, 120. That is, the field network controller 130 exchanges data with an arbitrary device via a field network according to a communication protocol for the field network.

In the field network, a communication protocol of an industrial network that guarantees arrival time of data may be adopted. For example, as the field network controller 130, one conforming to any of EtherCAT (registered trademark), DeviceNet (registered trademark), CompoNet (registered trademark), PROFIBUS (registered trademark), etc., may be adopted.

The USB controller 140 exchanges data with a support apparatus not shown herein, etc., via a USB connection.

In the memory card interface 150, a memory card 152 which is an example of a recording medium can be attached and removed. The memory card interface 150 can read and write various data (user program, setting data, log, trace data, etc.) with the memory card 152.

The local bus controller 160 exchanges data with the local unit 200 (see FIG. 1), etc., via the local bus.

FIG. 2 shows a configuration example in which necessary functions are provided by the processor 102 executing the program. However, some or all of the provided functions may be implemented by using a dedicated hardware circuit (e.g., an application specific integrated circuit (ASIC), a field-programmable gate array (FPGA), etc.). Alternatively, the main part of the main unit 100 may be realized by using hardware conforming to a general-purpose architecture (e.g., an industrial personal computer based on a general-purpose personal computer). In this case, by using a virtualization technique, a plurality of operating systems (OSs) having different uses may be executed in parallel, and necessary applications may be executed on the respective OSs. Further, a configuration in which functions such as a display apparatus, a support apparatus, etc., are integrated in the main unit 100 may be adopted.

### <C. Network connection mode>

Next, typical connection modes of a network configuration using a plurality of control apparatuses 1 according to the present embodiment will be described.

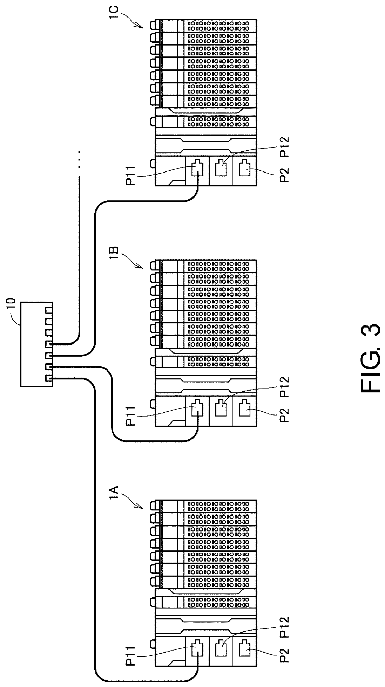

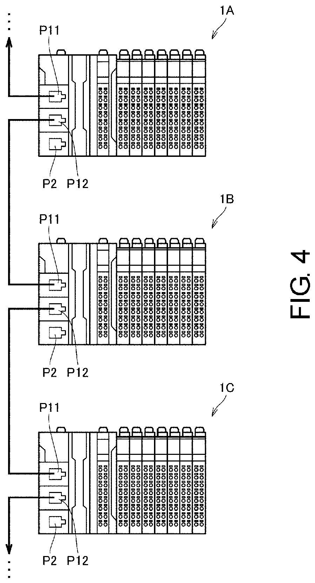

FIG. 3 is a schematic diagram showing a general mode of hub connection. FIG. 4 is a schematic diagram showing a connection configuration similar to a daisy chain. FIGs. 3 and 4 show examples in which three control apparatuses 1A to 1C are connected to each other.

In the connection mode shown in FIG. 3, the plurality of control apparatuses 1 are connected around a hub 10. More specifically, the communication port P11 of the control apparatus 1A is connected to one communication port of the hub 10, the communication port P11 of the control apparatus 1B is connected to another communication port of the hub 10, and the communication port P11 of the control apparatus 1C is connected to still another communication port of the hub 10.

In such a connection configuration, a cable for connection is laid from the hub 10 to each control apparatus 1.

On the other hand, in the connection mode shown in FIG. 4, the plurality of control apparatuses 1 are connected in series like a daisy chain. More specifically, the communication port P12 of the control apparatus 1A and the communication port P11 of the control apparatus 1B are connected, and the communication port P12 of the control apparatus 1B and the communication port P11 of the control apparatus 1C are connected. The communication port P11 of the control apparatus 1A may be connected to another control apparatus 1, and the communication port P12 of the control apparatus 1C may be connected to another control apparatus 1.

In order to realize such a connection mode, the communication port P11 and the communication port P12 of each control apparatus 1 function as a repeater hub or a switching hub. That is, a packet entering the communication port P11 of a certain control apparatus 1 is transmitted as-is or selectively from the communication port P12. Likewise, a packet entering the communication port P12 of a certain control apparatus 1 is transmitted as-is or selectively from the communication port P11.

In this manner, by implementing a process for appropriately transferring packets between the communication port P11 and the communication port P12, the hub 10 as shown in FIG. 3 can be eliminated.

For the ease of explanation, in FIGs. 3 and 4, an example in which the control apparatuses 1 are in network connection is shown. However, any arbitrary device can be connected to the network without being limited to the control apparatuses 1.

### <D. Network function>

Next, examples of the network functions provided by the control apparatus 1 according to the present embodiment by using the network controllers 110, 120 will be described. It is not necessary to implement all of the network functions described below, and it may be that only at least part of the functions are implemented.

The control apparatus 1 according to the present embodiment has a packet transfer function for outputting a duplicate of a packet received by the network controller 110 (the communication port P11) from the network controller 120 (the communication port P12) and outputting a duplicate of a packet received by the network controller 120 (the communication port P12) from the network controller 110 (the communication port P11). Below, some variations of such transfer function will be explained.

### (D1: Repeater hub function)

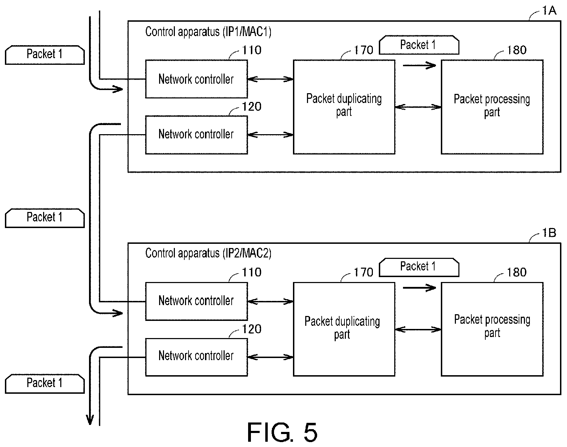

FIG. 5 is a schematic diagram showing a functional configuration in a case where the repeater hub function is implemented in the control apparatus 1 according to the present embodiment. Referring to FIG. 5, each of the control apparatuses 1A, 1B includes a packet duplicating part 170 and a packet processing part 180 in addition to the network controllers 110, 120. The packet duplicating part 170 and the packet processing part 180 may typically be implemented by the processor 102 executing a system program, etc. It may also be that part or all of the functions provided by the packet duplicating part 170 and the packet processing part 180 are implemented by using a dedicated hardware circuit, such as an ASIC, an FPGA, etc.

The packet duplicating part 170 duplicates an arbitrary packet received by one of the network controllers 110, 120 and outputs the packet to one of the network controllers 110, 120. Also, the packet duplicating part 170 outputs the packet received by one of the network controllers 110, 120 to the packet processing part 180.

The packet processing part 180 executes a process in correspondence with the packet given from the packet duplicating part 170.

The packet duplicating part 170 transmits a packet entering one of the network controllers as-is from the other network controller. As shown in FIG. 5, for example, when a packet 1 enters the network controller 110 of the control apparatus 1A, the packet 1 is duplicated as-is and transmitted from the network controller 120. Likewise, in the control apparatus 1B, the packet entering the network controller 110 is duplicated as-is and output from the network controller 120.

By repeating such duplicating and transmitting of packets, the packet communication substantially the same as the case where the plurality of control apparatuses 1 are connected to a common repeater hub can be realized.

### (D2: Switching hub function)

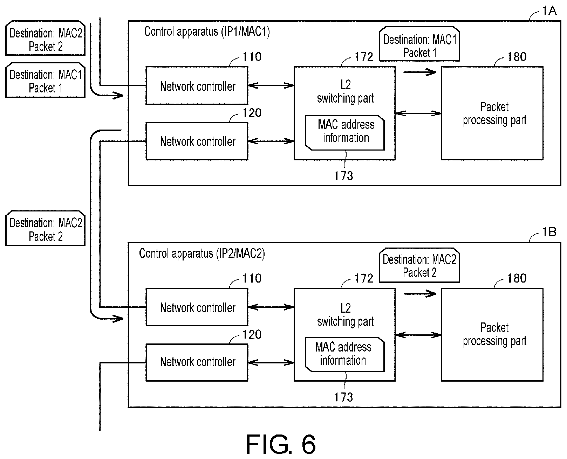

FIG. 6 is a schematic diagram showing a functional configuration in a case where the switching hub function is implemented in the control apparatus 1 according to an embodiment that is to serve for a better understanding of the present invention. Referring to FIG. 6, each of the control apparatuses 1A, 1B includes an L2 switching part 172 and the packet processing part 180 in addition to the network controllers 110, 120. Typically, the L2 switching part 172 and the packet processing part 180 may be implemented by the processor 102 executing a system program, etc. It may also be that part or all of the functions provided by the L2 switching part 172 and the packet processing part 180 are implemented by using a dedicated hardware circuit, such as an ASIC, an FPGA, etc.

The L2 switching part 172 realizes packet filtering and transfer processes at a layer 2 (L2) level. That is, based on the physical address designated as the destination of a packet received by one of the network controllers, the L2 switching part 172 determines whether to output a duplicate of the received packet from the other network controller. More specifically, the L2 switching part 172 refers to media access control (MAC) address information 173 describing the MAC address, which is the physical address of the control apparatus 1 connected to the network, and controls the transfer destination of the packet. The MAC address information 173 may be statically determined in advance or may be appropriately updated during the packet transfer process.

More specifically, when one of the network controllers 110, 120 receives a certain packet, based on the MAC address stored in the destination header of the received packet, the L2 switching part 172 determines whether the received packet is a packet addressed to its own apparatus. When determining that the received packet is a packet addressed to its own apparatus, the L2 switching part 172 outputs the received packet to the packet processing part 180. In this case, the L2 switching part 172 does not transfer the received packet to another control apparatus 1.

The packet processing part 180 executes a process in correspondence with the packet given from the L2 switching part 172.

On the other hand, when determining that the received packet is not a packet addressed to its own apparatus, based on the MAC address stored in the destination header of the received packet, the L2 switching part 172 determines whether the received packet should be transferred to another control apparatus 1. Then, when determining that the received packet should be transferred to another control apparatus 1, the L2 switching part 172 transmits a duplicate of the packet from the other network controller.

In this way, the L2 switching part 172 filters the packet entering one of the network controllers with the MAC address and then transmits the replicate from the other network controller. As shown in FIG. 6, for example, it is assumed that the packet 1 addressed to MAC1 (the MAC address of the control apparatus 1A) and a packet 2 addressed to MAC2 (the MAC address of the control apparatus 1B) enter the network controller 110 of the control apparatus 1A.

In this case, the L2 switching part 172 outputs the packet 1 addressed to its own apparatus to the packet processing part 180, and does not transfer the packet 1 to another control apparatus 1. On the other hand, the L2 switching part 172 replicates the packet 2 that is addressed to the control apparatus 1B but not to its own apparatus, and transmits it from the network controller 120.

By repeating such filtering and transmitting of packets, the packet communication substantially the same as the case where the plurality of control apparatuses 1 are connected to a common switching hub can be realized.

### (D3: Router function)

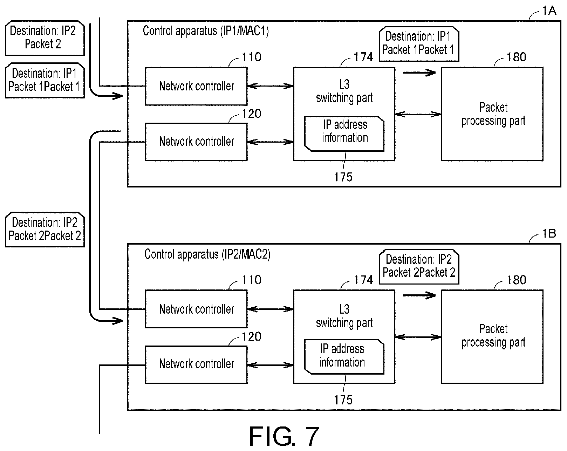

FIG. 7 is a schematic diagram showing a functional configuration when the router function is implemented in the control apparatus 1 according to a non-claimed embodiment. Referring to FIG. 7, each of the control apparatuses 1A, 1B includes an L3 switching part 174 and the packet processing part 180 in addition to the network controllers 110, 120. Typically, the L3 switching part 174 and the packet processing part 180 may be implemented by the processor 102 executing a system program, etc. It may also be that part or all of the functions provided by the L3 switching part 174 and the packet processing part 180 are implemented by using a dedicated hardware circuit, such as an ASIC, an FPGA, etc.

The L3 switching part 174 realizes packet filtering and transfer processes at a layer 3 (L3) level. That is, based on the network address designated as the destination of a packet received by one of the network controllers, the L3 switching part 174 determines whether to output a duplicate of the received packet from the other network controller. More specifically, the L3 switching part 174 refers to IP (Internet protocol) address information 175 in which the IP address as the network address of the control apparatus 1 connected to the network is described, and controls the transfer destination of the packet. The IP address information 175 may be statically determined in advance or may be appropriately updated during the packet transfer process.

More specifically, when one of the network controllers 110, 120 receives some packet, based on the IP address stored in the destination header of the received packet, the L3 switching part 174 determines whether the received packet is a packet addressed to its own apparatus. When determining that the received packet is a packet addressed to its own apparatus, the L3 switching part 174 outputs the received packet to the packet processing part 180. In this case, the L3 switching part 174 does not forward the received packet to another control apparatus 1.

The packet processing part 180 executes a process in correspondence with the packet given from the L3 switching part 174.

On the other hand, when determining that the received packet is not a packet addressed to its own apparatus, based on the IP address stored in the destination header of the received packet, the L3 switching part 174 determines whether the received packet should be transmitted to another control apparatus 1. Then, when determining that the received packet should be transmitted to another control apparatus 1, the L3 switching part 174 transmits a duplicate of the packet from the other network controller.

In this way, the L3 switching part 174 filters the packet entering one of the network controllers with the IP address, and then transmits the replicate from the other network controller. As shown in FIG. 7, for example, it is assumed that the packet 1 addressed to IP1 (the IP address of the control apparatus 1A) and the packet 2 addressed to IP2 (the IP address of the control apparatus 1B) enter the network controller 110 of the control apparatus 1A.

In this case, the L3 switching part 174 outputs the packet 1 addressed to its own process to the packet processing part 180, and does not transmit the packet 1 to another control apparatus 1. On the other hand, the L3 switching part 174 replicates the packet 2 that is addressed to the control apparatus 1B but not to its own apparatus, and transmits it from the network controller 120.

By repeating such filtering and transmitting of packets, the packet communication substantially the same as the case where the plurality of control apparatuses 1 are connected to a common router or bridge can be realized.

### (D4: Filtering function)

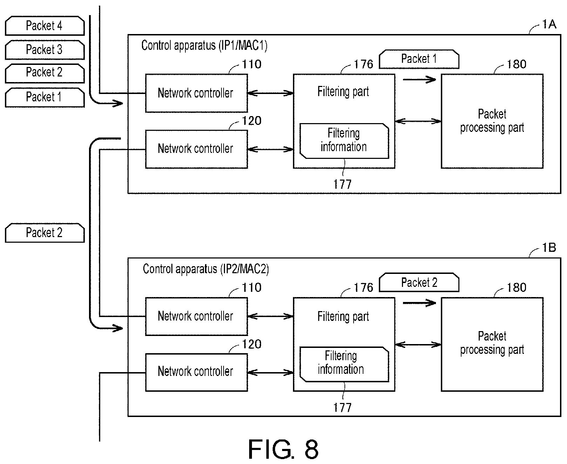

FIG. 8 is a schematic diagram showing a functional configuration in a case where the filtering function is implemented in the control apparatus 1 according to the present invention. Referring to FIG. 8, each of the control apparatuses 1A, 1B includes a filtering part 176 and the packet processing part 180 in addition to the network controllers 110, 120. The filtering part 176 and the packet processing part 180 are typically implemented by the processor 102 executing a system program, etc. It may also be that part or all of the functions provided by the filtering part 176 and the packet processing part 180 are implemented by using a dedicated hardware circuit, such as an ASIC, an FPGA, etc.

Based on the information (physical address) included in the entered packet, the filtering part 176 manages the transfer to the next control apparatus 1. More specifically, the filtering part 176 refers to filtering information 177 describing a transfer condition of the packet and determines whether the packet received by one of the network controllers 110, 120 is to be transferred and whether the transfer is necessary.

The filtering information 177 may be defined in the form of a whitelist describing a condition under which the packet should be transferred or in the form of a blacklist describing a condition under which the packet that should not be transferred. The filtering information 177 may be arbitrarily set or updated externally.

More specifically, when one of the network controllers 110, 120 receives some packet, the filtering part 176 refers to the filtering information 177 and determines whether the received packet should be received or transferred based on the header information, etc., in the received packet. A packet that is determined not to be received or transferred may be discarded.

The filtering part 176 outputs a packet addressed to its own apparatus, among the packets determined to be received or transferred, to the packet processing part 180. In this case, the filtering part 176 does not transmit the received packet to another control apparatus 1. Also, regarding a packet addressed to another control apparatus 1 among the packets determined to be received or transferred, the filtering part 176 sends a duplicate of the packet from the other network controller.

In this way, the filtering part 176 filters the packet entering one of network controllers under an arbitrary filtering condition and then sends the replicate from the other network controller as needed.

As shown in FIG. 8, for example, it is assumed to be a case where four packets (packets 1 to 4) enter the network controller 110 of the control apparatus 1A. Among these packets, the packet 1 is a transferable packet directed to the control apparatus 1A, and among these packets, the packet 2 is a transferable packet directed to the control apparatus 1B. On the other hand, the packets 3 and 4 are packets that cannot be transferred.

In this case, the filtering part 176 discards the packet 3 and the packet 4, and processes only the packet 1 and the packet 2 as valid ones. In this case, the packet 1 is given to the packet processing part 180 of the control apparatus 1A, and the packet 2 is given to the packet processing part 180 of the control apparatus 1B.

By applying such arbitrary filtering to packets, various applications such as forbidding transfer of a packet that can cause a security concern are possible.

### (D5: Packet monitoring function)

As shown in FIGs. 5 to 8, the control apparatus 1 according to the present embodiment can duplicate a packet received by one of the network controllers 110, 120 and transmit it from the other of the network controllers 110, 120. A packet monitoring function may be realized by utilizing the process of duplicating the packet from the one of the network controllers to the other network controller.

The packet monitoring function is a function for sequentially collecting the history of the packet transmitted on the network and can be used for investigating the cause of any trouble occurring in the network. In such a packet monitoring function, the beginning and the end of packet history collection can be arbitrarily designated. Further, arbitrary filtering on packets to be collected may be performed. For example, filtering such as only packets transmitted from a specific control apparatus 1 or only packets having a specific port number can be performed.

### <E. Setting method>

In the case of activating the network function as described above in the control apparatus 1, necessary settings in the support apparatus may be created and the created settings may be given to the target control apparatus 1. In this case, a network function that should be enabled, filtering information, etc., may be designated in the support apparatus.

As another setting method, an instruction designating the network function that should be enabled may be described in the user program executed in the control apparatus 1. In this case, by activating the control apparatus 1 and executing the user program, the designated network function is activated.

A function block corresponding to each network function may be provided as an instruction for activating such a network function. By providing the function block, the program creator can realize the necessary network function even if the program creator has limited network-related knowledge.

### <F. Modified Example>

In the above-described embodiment, the main unit 100 and the support apparatus are configured to be independent from each other. However, all or part of the functions of the support apparatus may be incorporated into the main unit 100. In this case, for example, by using the virtualization technology, a process equivalent to the control apparatus 1 and a process equivalent to the support apparatus may be executed in parallel on common hardware.

In the above-described embodiment, the control apparatus 1 (PLC) including the main unit 100 and the local unit 200 is exemplified. However, a configuration in which a safety control unit, a special control unit, etc., is mounted on a local bus from the main unit 100 may be adopted. In this case, the mounted safe control unit or special control unit can also establish connection with another unit or device by using the network controllers 110, 120 of the main unit 100. Also, in this case, the network functions as described above can be applied.

### <H. Benefits>

The control apparatus 1 according to the present embodiment has two network controllers, and can arbitrarily transfer packets between the network controllers, and implements a network function which uses such a packet transfer function. By using the network function implemented in the control apparatus, the configuration of network connection can be simplified even when multiple control apparatuses are in network connection.

### [Description of Reference Numerals]

1, 1A, 1B, 1C control apparatus
10 hub
100 main unit
102 processor
104 chipset
106 main memory apparatus
108 secondary memory apparatus
110, 120 network controller
130 field network controller
140 USB controller
150 memory card interface
152 memory card
160 local bus controller
170 packet duplicating part
172, 174 switching part
173 address information
175 IP address information
176 filtering part
177 filtering information
180 packet processing part
200 local unit
P11, P12, P2 communication port

## Claims

1. A control apparatus (1A) for controlling an object under control, comprising:
a first network controller and a second network controller (110, 120) each configured for exchanging data according to a first communication protocol with another control apparatus (1B, 1C);
a packet transferring part (170, 172, 174, 176), coupled to the first network controller and the second network controller (110, 120), for receiving a packet from one of the first network controller and the second network controller (110, 120) and outputting a duplicate of the received packet; and
a packet processing part (180), coupled to the packet transferring part (170, 172, 174, 176), for executing a process;
**characterized in that** the packet transferring part (170, 172, 174, 176) is configured to determine, based on a header information of the packet received by the one of the first network controller and second network controller (110, 120), whether to output the duplicate of the received packet, wherein
the packet transferring part (170, 172, 174, 176) is further configured
to output the duplicate of the received packet by the other of the first network controller and the second network controller (110, 120) to the other control apparatus (1B, 1C) when the header information indicates that the received packet is a transferable packet directed to the other control apparatus (1B, 1C),
to output the duplicate of the received packet to the packet processing part (180) when the header information indicates that the received packet is a transferable packet directed to the control apparatus (1A), wherein the packet processing part (180) is further configured to execute the process in correspondence with the duplicate of the received packet given from the packet transferring part (170, 172, 174, 176), and
to discard the packet when the header information indicates that the received packet is not a transferable packet,
wherein the packet transferring part (170, 172, 174, 176) is configured to determine, based on a physical address designated as a destination of a packet received, from another network controller of the other control apparatus, by the one of the first network controller and the second network controller (110, 120), whether to output the duplicate of the received packet.

2. The control apparatus (1A) according to claim 1, wherein the first communication protocol is a communication protocol including Ethernet and TCP/IP.

3. The control apparatus (1A) according to claim 1 or 2, further comprising:
a third network controller for exchanging data according to a second communication protocol different from the first communication protocol.

4. The control apparatus (1A) according to claim 3, wherein the second communication protocol is a communication protocol of an industrial network that guarantees arrival time of data.

## Patentansprüche

1. Steuervorrichtung (1A) zur Steuerung eines zu steuernden Objekts, umfassend:
einen ersten Netzwerk-Controller und einen zweiten Netzwerk-Controller (110, 120), die jeweils für den Austausch von Daten gemäß einem ersten Datenübertragungsprotokoll mit einer anderen Steuervorrichtung (1B, 1C) konfiguriert sind;
einen Paketübertragungsabschnitt (170, 172, 174, 176), der mit dem ersten Netzwerk-Controller und dem zweiten Netzwerk-Controller (110, 120) gekoppelt ist, um ein Paket von dem ersten Netzwerk-Controller oder dem zweiten Netzwerk-Controller (110, 120) zu empfangen und ein Duplikat des empfangenen Pakets auszugeben; und
einen Paketverarbeitungsabschnitt (180), der mit dem Pakettransferabschnitt (170, 172, 174, 176) gekoppelt ist, um einen Prozess auszuführen;
**dadurch gekennzeichnet, dass** der Paketübertragungsabschnitt (170, 172, 174, 176) so konfiguriert ist, dass er auf der Grundlage einer Header-Information des von dem ersten Netzwerk-Controller oder dem zweiten Netzwerk-Controller (110, 120) empfangenen Pakets bestimmt, ob das Duplikat des empfangenen Pakets ausgegeben werden soll, wobei
der Paketübertragungsabschnitt (170, 172, 174, 176) ferner konfiguriert ist, um
das Duplikat des empfangenen Pakets durch den zweiten Netzwerk-Controller oder den ersten Netzwerk-Controller (110, 120) an die andere Steuervorrichtung (1B, 1C) auszugeben, wenn die Header-Information anzeigen, dass das empfangene Paket ein übertragbares Paket ist, das an die andere Steuervorrichtung (1B, 1C) gerichtet ist,
um das Duplikat des empfangenen Pakets an den Paketverarbeitungsabschnitt (180) auszugeben, wenn die Header-Information anzeigt, dass das empfangene Paket ein übertragbares Paket ist, das an die Steuervorrichtung (1A) gerichtet ist, wobei der Paketverarbeitungsabschnitt (180) ferner konfiguriert ist, um den Prozess in Übereinstimmung mit dem Duplikat des empfangenen Pakets, das von dem Paketübertragungsabschnitt (170, 172, 174, 176) ausgegeben wird, durchzuführen, und
das Paket zu verwerfen, wenn die Header-Information darauf hinweist, dass es sich bei dem empfangenen Paket nicht um ein übertragbares Paket handelt,
wobei der Paketübertragungsabschnitt (170, 172, 174, 176) so konfiguriert ist, dass er auf der Grundlage einer physikalischen Adresse, die als ein Ziel eines Pakets bezeichnet wird, das von einem anderen Netzwerk-Controller der anderen Steuervorrichtung durch den ersten Netzwerk-Controller oder den zweiten Netzwerk-Controller (110, 120) empfangen wird, bestimmt, ob das Duplikat des empfangenen Pakets ausgegeben werden soll.

2. Steuervorrichtung (1A) nach Anspruch 1, wobei das erste Datenübertragungsprotokoll ein Datenübertragungsprotokoll einschließlich Ethernet und TCP/IP ist.

3. Steuervorrichtung (1A) nach Anspruch 1 oder 2, ferner umfassend:
einen dritten Netzwerk-Controller zum Austausch von Daten gemäß einem zweiten Datenübertragungsprotokoll, das sich von dem ersten Datenübertragungsprotokoll unterscheidet.

4. Steuervorrichtung (1A) nach Anspruch 3, wobei das zweite Datenübertragungsprotokoll ein Datenübertragungsprotokoll eines industriellen Netzwerks ist, das die Ankunftszeit von Daten garantiert.

## Revendications

1. Un appareil de commande (1A) pour commander un objet sous contrôle, comprenant :
un premier contrôleur de réseau et un second contrôleur de réseau (110, 120) configurés chacun pour échanger des données selon un premier protocole de communication avec un autre appareil de commande (1B, 1C) ;
une partie de transfert de paquet (170, 172, 174, 176), couplée au premier contrôleur de réseau et au second contrôleur de réseau (110, 120), pour recevoir un paquet de l'un du premier contrôleur de réseau et du second contrôleur de réseau (110, 120) et délivrer en sortie un duplicata du paquet reçu ; et
une partie de traitement de paquets (180), couplée à la partie de transfert de paquets (170, 172, 174, 176), pour exécuter un processus ;
**caractérisé en ce que** la partie de transfert de paquets (170, 172, 174, 176) est configurée pour déterminer, sur la base d'une information d'en-tête du paquet reçu par l'un du premier contrôleur de réseau et du second contrôleur de réseau (110, 120), s'il faut sortir le duplicata du paquet reçu, où
la partie de transfert de paquets (170, 172, 174, 176) est en outre configurée pour sortir le duplicata du paquet reçu par l'autre du premier contrôleur de réseau et du second contrôleur de réseau (110, 120) vers l'autre appareil de commande (1B, 1C) lorsque les informations d'en-tête indiquent que le paquet reçu est un paquet transférable dirigé vers l'autre appareil de commande (1B, 1C) ,
pour délivrer le duplicata du paquet reçu à la partie de traitement de paquets (180) lorsque les informations d'en-tête indiquent que le paquet reçu est un paquet transférable dirigé vers l'appareil de commande (1A), dans lequel la partie de traitement de paquets (180) est en outre configurée pour exécuter le processus en correspondance avec le duplicata du paquet reçu fourni par la partie de transfert de paquets (170, 172, 174, 176), et
pour rejeter le paquet lorsque les informations d'en-tête indiquent que le paquet reçu n'est pas un paquet transférable ,
dans lequel la partie de transfert de paquets (170, 172, 174, 176) est configurée pour déterminer, sur la base d'une adresse physique désignée comme une destination d'un paquet reçu, en provenance d'un autre contrôleur de réseau de l'autre appareil de commande, par l'un du premier contrôleur de réseau et du second contrôleur de réseau (110, 120), s'il faut sortir le duplicata du paquet reçu.

2. L'appareil de commande (1A) selon la revendication 1, dans lequel le premier protocole de communication est un protocole de communication comprenant Ethernet et TCP/IP.

3. L'appareil de commande (1A) selon la revendication 1 ou 2, comprenant en outre :
un troisième contrôleur de réseau pour échanger des données selon un deuxième protocole de communication différent du premier protocole de communication.

4. L'appareil de commande (1A) selon la revendication 3, dans lequel le deuxième protocole de communication est un protocole de communication d'un réseau industriel qui garantit le temps d'arrivée des données.
